# EUROPEAN PATENT SPECIFICATION

(11) **EP 3 069 684 B1**
(45) Date of publication and mention of the grant of the patent: **13.03.2019**
(21) Application number: 15159198.9
(22) Date of filing: 16.03.2015
(51) Int. Cl.: A61C 13/00, A61C 13/12, B23Q 3/06

(54) **Improved device for supporting preformed elements for single superstructures of dental prostheses and relative production process**
Verbesserte Vorrichtung zur Unterstützung von vorgeformten Elementen für Einzelaufbauten von Zahnprothesen und entsprechendes Herstellungsverfahren
Dispositif amélioré pour le support d'éléments pré-formés pour des superstructures simples de prothèses dentaires et processus de production correspondant

(43) Date of publication of application: 21.09.2016
(73) Proprietor: Kulzer GmbH, 63450 Hanau (DE)
(72) Inventor: Piasini, Bruno, 23020 MONTAGNA IN VALTELLINA - SONDRIO - (IT); Scotti, Antonio Maria, 20900 MONZA E BRIANZA (IT)
(74) Representative: Martegani, Franco

(56) References cited:
- EP-A1- 2 289 461
- WO-A1-99/62422
- WO-A1-2013/117540
- DE-U1-202014 103 291
- KR-A- 20130 049 631
- KR-A- 20130 117 046
- KR-B1- 101 419 832

## Description

The present invention relates to an improved device for supporting preformed elements for single superstructures of dental prostheses. The invention also relates to the process used for producing said single structures.

### Field of the invention

The field of the invention relates to systems used for producing single dental prostheses, starting from a preformed element which must be processed and shaped in a personalized manner, in order to obtain a single superstructure having the designed shape.

### Background of the invention

Current devices for supporting preformed elements use a fixing screw inserted in a channel of the preformed element, previously prepared and oriented in an axial direction with respect to the interface, in turn defined by the wall or reciprocal supporting surface between the preformed element and its support. Consequently, when the prosthesis is assembled in the mouth, the hole for the insertion channel of the screw may remain visibly exposed, with unattractive effects due to the exposure of the closing ceramic material, normally having a different colour or shade from that of the remaining visible part of the prosthesis.

KR101419832 B1 discloses a device for supporting a preformed element and comprises a support with a base having a threaded portion, an insert, and a threaded ferrule matching the threaded portion of the base, wherein the ferrule is provided with a hole and an edge suitable for engaging with a shoulder of a preformed element such that the edge of the ferrule, when the ferrule is threaded onto the base, clamps the preformed element between the insert and the ferrule.

### Summary of the invention

The main objective of the present invention is to provide a new device for supporting preformed elements and the relative production process, which, unlike analogous devices of the known art, do not require the formation of a channel for the screw prior to the processing of the preformed element.

A further objective of the invention is to provide a device of the above-mentioned type, which allows the preformed element to be anchored, also in the presence of a channel for the screw having a non-axial orientation, or with any inclination, corresponding to that designed.

These and other objectives are achieved with the device and process of claims 1 and 3, respectively.

With respect to known supporting devices, that forming the object of the present invention offers the advantage of not requiring the previous formation of a hole for the insertion channel of the screw in the preformed element. In this way, superstructures can be prepared, in which the channel for anchoring screw to the implant, is formed according to the design specifications and therefore with a varying angulation, according to the final position of the above-mentioned channel in the mouth, as established by the doctor.

In this way, the visible exposure of the closing material of the above-mentioned channel can therefore be avoided, with a considerable aesthetic benefit.

### Detailed description of the drawings

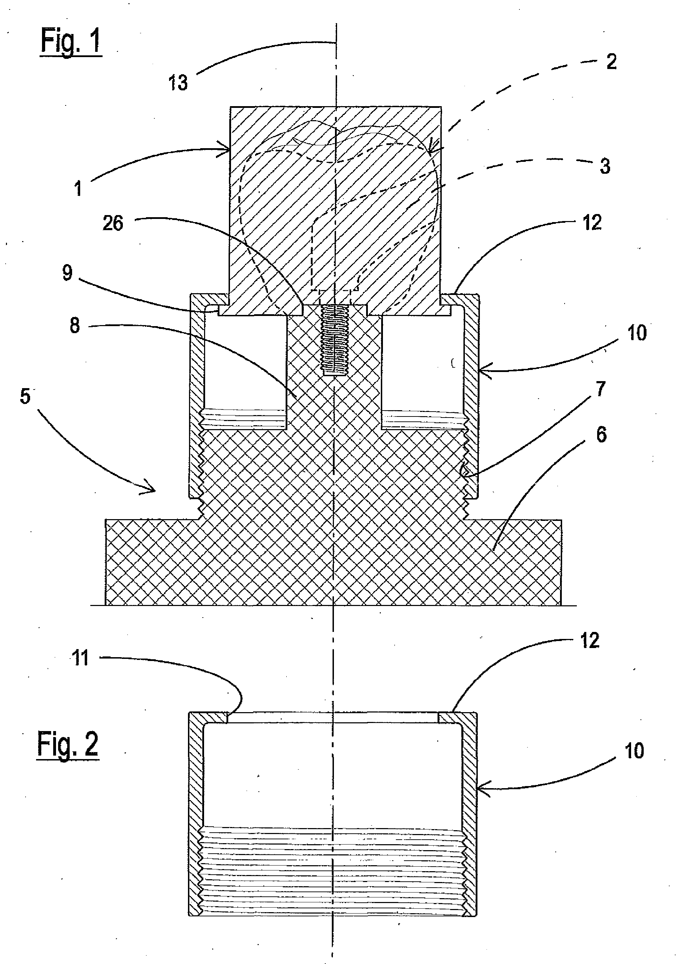

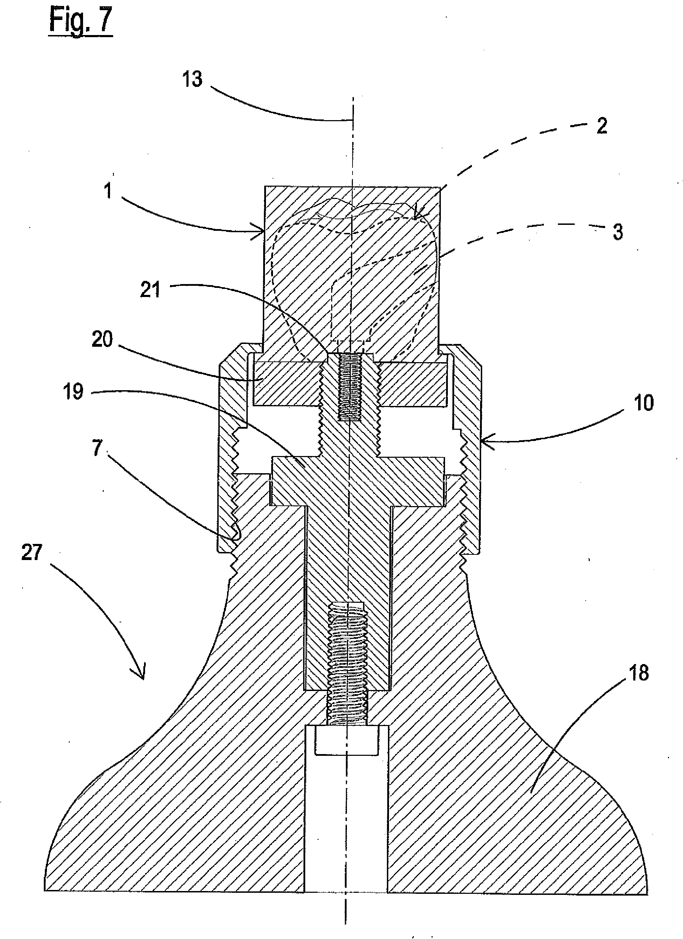

These and other objectives, advantages and characteristics appear evident from the following description of preferred embodiments of the device and process of the invention according to claims 1-3, illustrated, as non-limiting examples, in the figures 7-9 of the enclosed drawings. The embodiments illustrated in figures 1-6 do not form part of the present invention.
- figure 1 illustrates the initial production phase of the superstructure and respective hole for the channel of the screw, in a first embodiment which do not form part of the present invention;
- figure 2 illustrates a sectional view of the threaded ferrule used on the device of fig.1;
- figure 3 illustrates a variant of the device of figure 1;
- figure 4 illustrates the flange used on the device of figure 3;
- figure 5 illustrates the superstructure obtained with the device of figures 1 and 3;
- figure 6 illustrates the final superstructure, obtained by the processing of that of figure 5;
- figure 7 illustrates an embodiment of the invention supporting the preformed element of figure 1; and
- figures 8 and 9 illustrate, in a longitudinal and front section, another embodiment of the device of the invention, in its version for withholding a plurality of preformed elements.

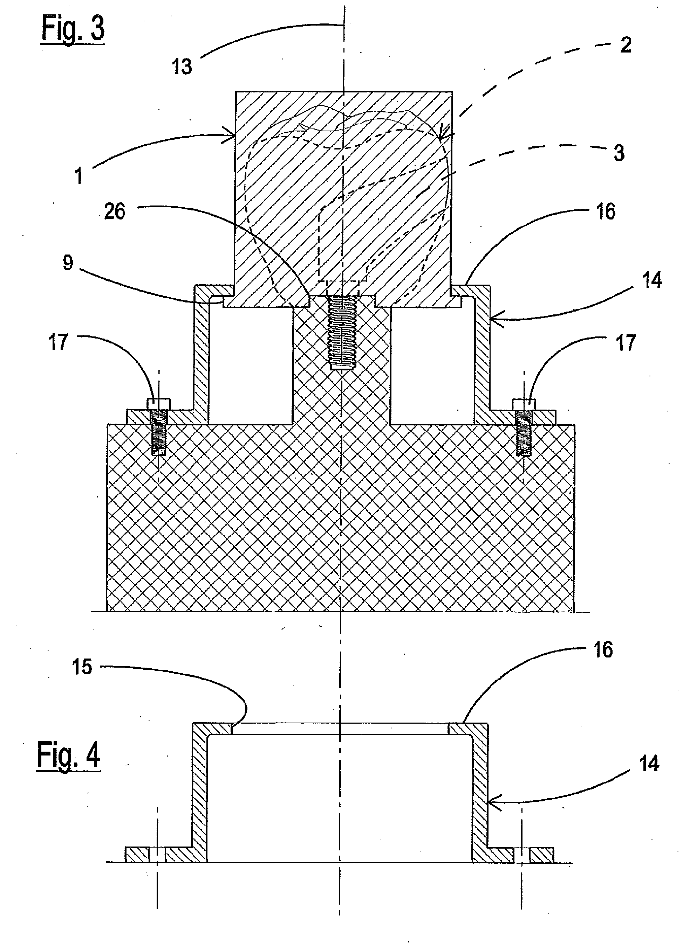

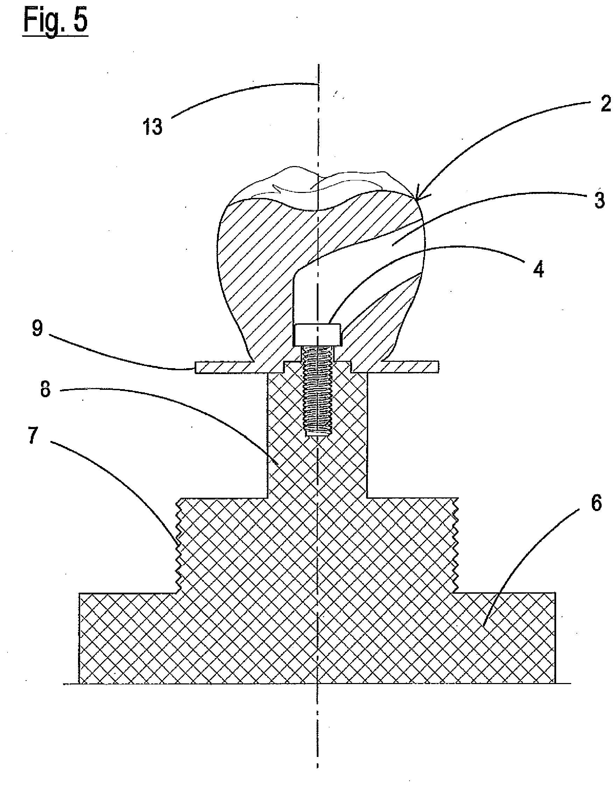

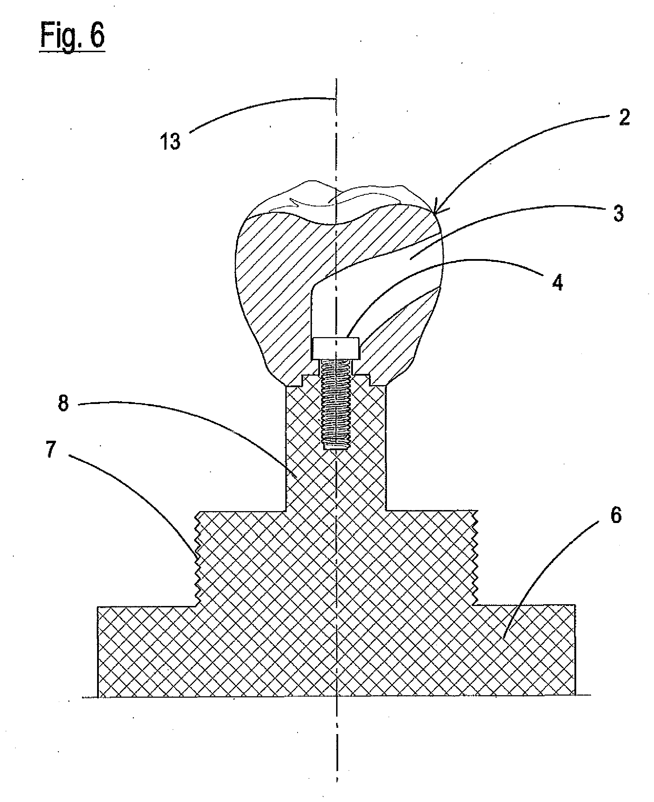

The device illustrated in figures 1 and 3 is suitable for supporting a preformed element 1, consisting of a cylindrical body made of titanium, chromium-cobalt alloys or similar, for producing a single structure 2 (dashed line in figures 1 and 3) for dental prostheses, provided with a channel 3 for the insertion of the fixing screw 4 to the implant (figures 5 and 6).

In the embodiment illustrated in figures 1 and 2, the device comprises a support 5 having a base 6 with a threaded portion 7 and a stem 8 including the interface 26 of the implant and on which the preformed element 1 rests, on the side of its protruding shoulder 9.

The anchoring of the preformed element 1 to the support 5 is effected by means of a threaded ferrule 10 having a hole 11, whose edge 12 is engaged on the above-mentioned protruding shoulder 9 of element 1, holding it in position. When the element 1 has been blocked onto the support 5 by the threaded ferrule 10, it is possible to operate on the same element 1, so as to provide the superstructure 2 with a channel 3 having a tilted axis, according to the design of the superstructure, with respect to the axis 13 of the preformed element 1.

In the variant illustrated in figures 3 and 4, the preformed element 1 is blocked onto the support 5 by means of a flange 14, also provided with a hole 15 whose edge 16 is suitable for being engaged on the protruding shoulder 9 of the element 1, so as to block it in position onto the same support 5. Bolts 17 are used for this purpose, for fixing the flange 14 to the above-mentioned support (figure 3).

After processing the preformed element 1 of figures 1 and 3, the superstructure 2, of figure 5, is obtained, still carrying the shoulder 9 of the same element 1. The treatment necessary for obtaining the final superstructure 2 of figure 6 then comprises inserting the screw 4 into the channel 3 for fixing the same superstructure to the stem 8 of the support 5. The threaded ferrule 10 of figure 2 or the flange 14 of figure 4 are subsequently removed and finally the necessary finishings are effected until the final superstructure 2 of figure 6 has been obtained.

In figure 7, the threaded ferrule 10 of figure 2 or the flange 14 of figure 4 is blocked onto a supporting device 27 equipped with a supporting base 18, on which an insert 19 is, in turn, fixed, containing a nut 20 at the height of its interface 21.

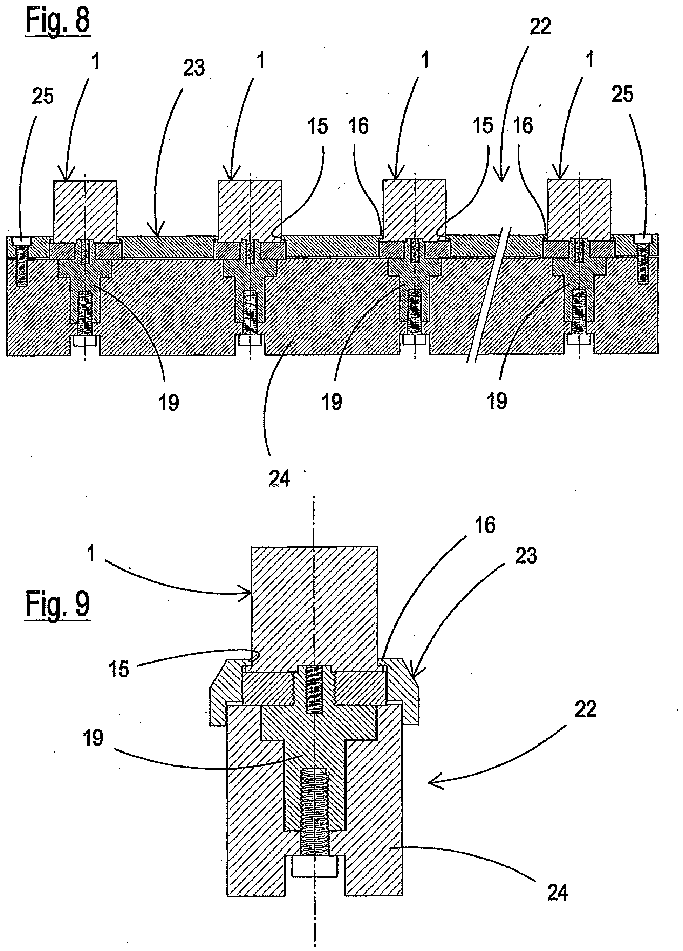

In figures 8 and 9, a device 22 is used for the multiple support of a plurality of inserts 19, cooperating with a corresponding multiple flange 23 fixed to the corresponding base 24 of the same device 22. The above-mentioned flange 23 is, in turn, provided with a plurality of holes 15 and respective edges 16 for supporting a corresponding number of elements 1. Bolts 25 are used for reciprocally fixing the flange 23 to the base 24 of the multiple supporting device 22.

It should be apparent to those skilled in the art that various additional objects and advantages have been attained by the invention and that a variety of nodifications can be made within the scope of the present invention, being limited by the following appended claims only.

## Claims

1. A device for supporting at least one preformed element (1) wherein the at least one preformed element (1) consists of a cylindrical body for producing a single superstructure (2) for dental prostheses provided with a channel (3) for the insertion of a fixing screw (4) to an implant, wherein the device comprises a support (22,27) having a base (18,24) and means which are engageable outside said at least one preformed element (1) for holding the preformed element on said support (5, 22, 27), wherein said means consists of
- an insert (19) fixed to the base and having an interface (21) of the implant for supporting said preformed element (1) on the above mentioned base (18,24) of the corresponding supporting device (27), said insert (18) being also provided with a nut (20) positioned in correspondence with the above-mentioned interface (12);
- either a threaded ferrule (10) provided with a hole (11) and an edge (12) suitable for engaging with said shoulder (9) of said preformed element (1), said base (18) being provided with a threaded portion (7) suitable for cooperating with said ferrule (10); or
- a flange (23) provided with at least one hole (15) and an edge (16) suitable for engaging with said shoulder (9), bolts (25) being provided, for fixing said flange (23) to the respective supporting base (24).

2. The device according to claim 1, **characterized in that** the above-mentioned flange (23) is provided with a plurality of holes (15) with respective edges (16) for supporting a corresponding number of preformed elements (1) .

3. A process for the production of at least one single superstructure for dental prostheses with the device according to one or more of claims 1 or 2, **characterized in that** it comprises (i) the initial processing of said preformed element (1) held on the respective support (22, 27), with the formation of at least one superstructure (2) provided with a channel (3) for the screw (4) having a tilted axis with respect to the axis (13) of the same preformed element (1) and (ii) the finishing of said superstructure (2) by removing the above-mentioned protruding shoulder (9) from said preformed element (1).

## Patentansprüche

1. Vorrichtung zum Tragen zumindest eines vorgeformten Elements (1), wobei das zumindest eine vorgeformte Element (1) aus einem zylindrischen Körper zum Erzeugen eines einzelnen Überbaus (2) für Dentalprothesen besteht, die mit einem Kanal (3) für das Einsetzen einer Fixierschraube (4) in ein Implantat versehen sind, wobei die Vorrichtung einen Träger (22, 27) mit einer Basis (18, 24) sowie ein Mittel umfasst, das außerhalb des zumindest einen vorgeformten Elements zum Halten des vorgeformten Elements (1) an dem Träger (5, 22, 27) in Eingriff bringbar ist, wobei das Mittel besteht aus:
- einem Einsatz (19), der an der Basis fixiert ist und eine Schnittstelle (21) des Implantats zum Tragen des vorgeformten Elements (1) an der Basis (18, 24) der entsprechenden Trägervorrichtung (27) aufweist, wobei der Einsatz (18) auch mit einer Mutter (20) versehen ist, die entsprechend der Schnittstelle (12) positioniert ist;
- entweder einer Gewindehülse (10), die mit einem Loch (11) und einem Rand (12) versehen ist, der zum Eingriff mit der Schulter (9) des vorgeformten Elements (1) geeignet ist, wobei die Basis (18) mit einem Gewindeabschnitt (7) versehen ist, der zum Zusammenwirken mit der Hülse (10) geeignet ist; oder
- einem Flansch (23), der mit zumindest einem Loch (15) und einem Rand (16) versehen ist, der zum Eingriff in der Schulter (9) geeignet ist, wobei Schrauben (25) zum Befestigen des Flansches (23) an der jeweiligen Trägerbasis (24) vorgesehen sind.

2. Vorrichtung nach Anspruch 1, **dadurch gekennzeichnet, dass** der Flansch (23) mit einer Mehrzahl von Löchern (15) mit jeweiligen Rändern (16) zum Tragen einer entsprechenden Anzahl vorgeformter Elemente (1) versehen ist.

3. Prozess für die Erzeugung zumindest eines einzelnen Überbaus für Dentalprothesen mit der Vorrichtung nach einem der Ansprüche 1 oder 2, **dadurch gekennzeichnet, dass** er (i) die Anfangsbearbeitung des vorgeformten Elements (1), das an dem jeweiligen Träger (22, 27) gehalten ist, mit der Ausbildung zumindest eines Überbaus (2), der mit einem Kanal (3) für die Schraube (4) versehen ist, der eine schräggestellte Achse in Bezug auf die Achse (13) des vorgeformten Elements (1) aufweist, und (ii) die Fertigstellung des Überbaus (2) durch Entfernen der vorragenden Schulter (9) von dem vorgeformten Element (1) umfasst.

## Revendications

1. Dispositif pour supporter au moins un élément pré-formé (1), l'au moins un élément pré-formé (1) consistant en un corps cylindrique pour produire une superstructure simple (2) pour prothèses dentaires comportant un canal (3) pour l'insertion d'une vis de fixation (4) à un implant, le dispositif comprenant un support (22, 27) ayant une base (18, 24) et des moyens qui sont aptes à être engagés à l'extérieur dudit au moins un élément pré-formé (1) pour maintenir l'élément pré-formé sur ledit support (5, 22, 27), lesdits moyens consistant en :
- un insert (19) fixé à la base et ayant une interface (21) de l'implant pour supporter ledit élément pré-formé (1) sur la base mentionnée ci-dessus (18, 24) du dispositif de support correspondant (27), ledit insert (18) comportant également un écrou (20) positionné en correspondance avec l'interface mentionnée ci-dessus (12) ;
- soit une virole filetée (10) comportant un trou (11) et un bord (12) approprié pour être engagé avec ledit épaulement (9) dudit élément pré-formé (1), ladite base (18) comportant une partie filetée (7) appropriée pour coopérer avec ladite virole (10) ; soit
- une bride (23) comportant au moins un trou (15) et un bord (16) approprié pour être engagé avec ledit épaulement (9), des boulons (25) étant prévus, pour fixer ladite bride (23) à la base de support respective (24) .

2. Dispositif selon la revendication 1, **caractérisé par le fait que** la bride mentionnée ci-dessus (23) comporte une pluralité de trous (15) avec des bords respectifs (16) pour supporter un nombre correspondant d'éléments pré-formés (1).

3. Procédé pour la production d'au moins une superstructure simple pour prothèses dentaires avec le dispositif selon une ou plusieurs des revendications 1 ou 2, **caractérisé par le fait qu'**il comprend (i) le traitement initial dudit élément pré-formé (1) maintenu sur le support respectif (22, 27), avec la formation d'au moins une superstructure (2) comportant un canal (3) pour la vis (4) ayant un axe incliné par rapport à l'axe (13) du même élément pré-formé (1), et (ii) la finition de ladite superstructure (2) par retrait de l'épaulement en saillie mentionné ci-dessus (9) à partir dudit élément pré-formé (1) .
